# EUROPEAN PATENT APPLICATION

(11) **EP 3 611 427 A1**
(43) Date of publication of application: **19.02.2020**
(21) Application number: 19188839.5
(22) Date of filing: 29.07.2019
(51) Int. Cl.: F21S 43/245, F21S 43/239

(54) **LIGHTING SYSTEM FOR A VEHICLE**

(30) Priority: 17.08.2018 DE 102018213942
(71) Applicant: Volkswagen AG, 38440 Wolfsburg (DE); Odelo Otomotiv Aydinlatma Anonim Sirketi, 16220 Nilüfer-Bursa (TR)
(72) Inventor: Studeny, Christian, 38104 Braunschweig (DE); Hübner, Torsten, 38461 Danndorf (DE); Boduroglu, Sercan, 16220 Nilüfer, Bursa (TR); Güney, Elif, 16220 Nilüfer, Bursa (TR); Sen, Dogan, 16220 Nilüfer, Bursa (TR)
(74) Representative: Gulde & Partner

(57) **Abstract**

The invention relates to a light guide (10), integrated with a locally interrupted bezel (42), shielding light (58) inside the light guide 810) from the environment by total reflection inside the light guide (10), in a single-piece design. The invention further refers to a system (20) comprising the light guide (10), a light source (18) and a holding structure (12) for the light guide (10). Further, a vehicle (50) is provided, that comprises the light guide (10) as part of a lighting system (20) of the vehicle (50).

## Description

The invention relates to a light guide according to the main body of claim 1, further to a light guide system according to the main body of claim 7, still further to a lighting system according to the main body of claim 8 and finally to a vehicle according to the main body of claim 11.

In the automotive field, various designs of light guides and designs making use of light guides are known.

For example, US 2013/0322103 A1 describes a vehicle head lamp making use of a reflector that reflects light of a light guide.

To achieve a desired light allocation or specific light patterns it is further known to combine a light guide with, for example, a volume scattering optical element or to apply an additional bezel.

However, such technical solutions are of high technical complexity.

The invention described herein therefore aims at providing an improved light guide that features low technical complexity and allows for creation of specific light patterns.

The given task is solved by the subject-matter of the independent claims 1, 7, 8 and 11. Advantageous embodiments of the invention can further be gained from the dependent claims.

A first aspect of the invention refers to a light guide, comprising at least a light incoupling section located on a first side of the light guide and a light outcoupling section, located on a second side of the light guide and featuring a number of light outcoupling structures, further a vision surface, located on a side opposite to the light outcoupling section and further a main light propagation path inside the light guide that extends from the light incoupling section between the light outcoupling section and a lower side of the vision surface, wherein the light outcoupling structures are comprising light outcoupling surfaces with a light outcoupling direction that is at least partially oriented transverse the main light propagation path.

According to the invention, along the main light propagation path the light outcoupling surfaces are at least sectionally interrupted by a light reflecting structure, that forms an integrated part with the light outcoupling section and the lower side of the vision surface and that is adapted to achieve total reflection of light between the light reflecting structure and the lower side of the vision surface.

In other words, the light reflecting structure, the vision surface and the light outcoupling structures are forming a single part, leading to redundancy of additional bezels, for example. Accordingly, no additional assembly effort is required and accuracy of a relative position of the light reflecting structure, the vision surface and the light outcoupling surfaces is high, due to the single-part design. Based on the low technical complexity of the light guide of the invention it is achievable at low effort an in a very compact manner.

The light guide of the invention may preferably be a surface light guide. The first side is preferably oriented perpendicular to the second side or, still preferred, the first side and second side are oriented in a defined angle to each other and not lying in the same plane, respectively. Light coupled in via the first side propagates, for example, parallel to the second side and is leaving the light guide via the light outcoupling structures through the vision surface. The light is leaving the light guide in the light outcoupling direction, for example, in an angle between 10° and 80°. In case of the light reflecting structure interrupting the light outcoupling surfaces, total reflection inside the light guide is maintained and no light can leave the light guide in the respective area, accordingly.

In a preferred embodiment of the light guide of the invention, the light outcoupling structures are formed by recesses in the light reflecting structure on the second side. For example, an injection molding process may be applied and geometry of the light guide is manufactured, accordingly. Further, a cutting or deformation process may be applied to the second side o the light guide to manufacture the recesses. All this further reduces the manufacturing effort and allows for easy manufacturing of the light guide at high lot sizes.

In a further preferred embodiment of the light guide of the invention, the light outcoupling structures are formed by material coating on the light reflecting structure on the second side. For example a printing process may be applied. It is also possible to apply material coating to the recesses described above. This way it is possible to apply a design that may for example not be suitable for injection molding, as well.

In a further preferred embodiment of the light guide of the invention, in sections, wherein the light outcoupling surfaces are not interrupted by the light reflecting structure, the light outcoupling surfaces are interrupting total reflection of the light between the lower side of the vision surface and the light reflecting structure. This way, the light outcoupling surfaces are, by outcoupling of light, clearly visible from the outside, whereas the light reflecting structure in-between appears as a dark area, due to maintained total reflection inside the light guide.

In a further preferred embodiment of the light guide of the invention, the light outcoupling structures are featuring a rib-type shape extending transverse the main light propagation path. This way, re-directing the light from the main light propagation path to the light outcoupling direction is very effective and homogenous. Still, such light outcoupling structures can be easily manufactured.

In a further preferred embodiment of the light guide of the invention, the light reflecting structure is forming a pattern between the light outcoupling structures. For example, a crisscross pattern may be formed. The design of the light guide of the invention allows even for complex patterns to be manufactured at high accuracy. Here, it contributes, that the integrated design of the light guide features a higher stiffness than a conventional multi-part design.

A second aspect of the invention refers to a light guide system, comprising a light guide of the invention according to the preceding description and a light guide support structure, connectable to the light guide.

This allows for easy relative positioning of the light guide and surrounding structural elements, for example of a vehicle. The light guide support structure provides additional mechanical strength to the light guide, as well.

A third aspect of the invention refers to a lighting system, comprising a light guide of the invention according to the preceding description and/or a light guide system of the invention according to the preceding description, further comprising at least one light source, configured to supply light to a light incoupling section of a light guide of the lighting system.

The light source may preferably be directly applied to the light guide by a holding structure, for example. It may also be connected to the light guide support structure.

In a preferred embodiment of the lighting system of the invention, the light source comprises an additional light guide that is functionally connected to a light incoupling section of the light guide of the invention. This allows for flexible positioning of the light source.

In an alternatively preferred embodiment of the lighting system of the invention, the light source is located in front of a light incoupling section of the light guide.

Preferably, the light source is positioned by the holding structure. The holding structure preferably comprises a circuit board. If a number of light sources are used, for example a number of LEDs, the light sources are preferably placed on a common circuit board.

A fourth aspect of the invention refers to a vehicle, comprising at least a light guide of the invention according to the preceding description and/or a light guide system of the invention according to preceding description and/or a lighting system of the invention according to the preceding description.

In a preferred embodiment of the vehicle of the invention, the light guide of the invention is comprised by a taillight of the vehicle. However, any light of the vehicle requiring a light pattern may advantageously be realized using the light guide of the invention.

The different embodiments of the invention described herein may be advantageously combined unless the contrary is indicated herein.

Summarized in other words, the invention refers to a light guide, integrated with a locally interrupted bezel, shielding light inside the light guide from the environment by total reflection inside the light guide, in a single-piece design. The invention further refers to a system comprising the light guide, a light source and a holding structure for the light guide. Further, a vehicle is provided, that comprises the light guide as part of a lighting system of the vehicle.

Reference is now made to the following figures, in order to describe preferred embodiments of the invention in more detail.
- Figure 1: illustrates a light guide and a light guide system in a lighting system according to a preferred embodiment of the invention;
- Figure 2: illustrates a cross-sectional view of a section of the light guide shown in Figure 1; and
- Figure 3: illustrates a vehicle comprising the lighting system according to a preferred embodiment of the invention.

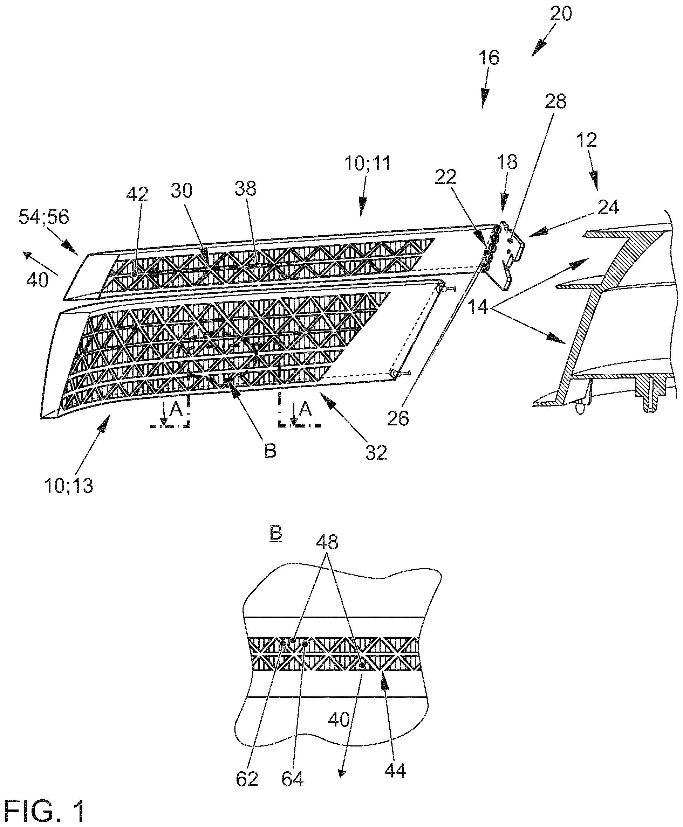

Figure 1 illustrates a light guide 10 according to the invention. Just as an example, the light guide 10 shown, features an upper part 11 and a lower part 13. Further, a light guide support structure 12 is provided, to receive the light guide 10. Therefore, the light guide 10 may be placed in a reception section 14 of the light guide support structure 12. The light guide 10 and the light guide support structure 12 are forming a light guide system 16.

A light source 18 is coupled to the light guide 10, here exemplarily shown with regard to the upper part 11 of the light guide 10. Light coupled into the light guide 10 may be internally transferred between the upper and lower part 11, 13 or additional light sources may be used. The light guide system 16 and the light source 18 are forming a lighting system 20.

The light guide 10 features a light incoupling section 22, located on a first side 24 of the light guide 10. The light source 18 is located in front of the light incoupling section 22. The light source 18 comprises a number of LEDs 26 carried by a circuit board 28 and arranged to supply light to the light incoupling section 22.

The light guide 10 further comprises a light outcoupling section 30 located on a second side 32 of the light guide 10. Herein, the first side 24 and the second side 32 are oriented perpendicularly to each other. Accordingly, a main light propagation path 38, that is a path the light supplied by the light source 18 takes inside the light guide 10, ranges from the first side 24 along the second side 32 and parallel to it.

A vision surface 54 is located on a side 56 of the light guide 10, opposite to the second side 32 with the light outcoupling section 30.

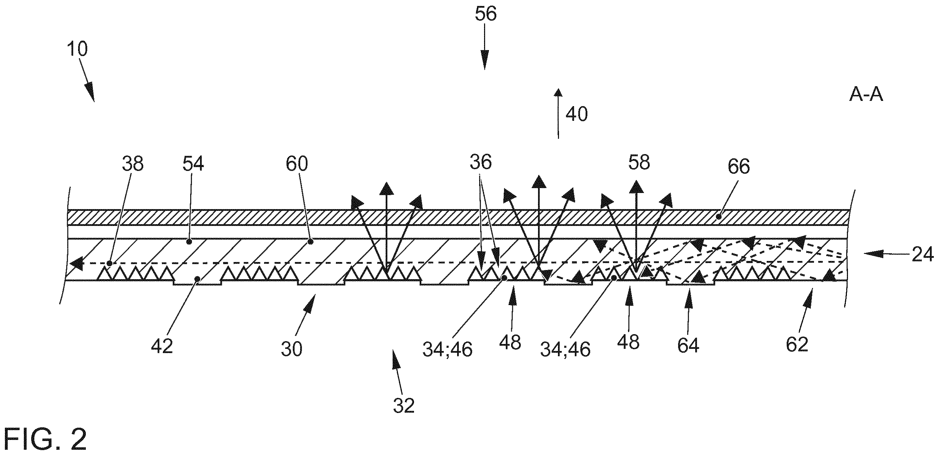

Now referring to Figure 2, a cross-sectional view of a section of the light guide 10 as shown in Figure 1 is described. The cutting line A-A is shown in Figure 1.

The light outcoupling section 30, as shown in Figure 2, features a number of light outcoupling structures 34. The light outcoupling structures 34 comprise light outcoupling surfaces 36. The light outcoupling structures 34 and thereby the light outcoupling surfaces 36 are formed by recesses 46, introduced to a light reflecting structure 42 of the light guide 10. The light reflecting structure 42 is considered the main body of the light guide 10. In front of the vision surface 54, a light permeable panel 66 may be placed as a protection surface.

In the illustrated example, the light outcoupling structures 34 are of a rib-type shape and are running transverse a main light propagation path 38. The light 58 leaves the light guide 10 via the light outcoupling surfaces 36 through the vision surface 54 in a light outcoupling direction 40. The light outcoupling direction 40 is mainly oriented transverse the main light propagation path 38. The light outcoupling direction 40 is also illustrated in Figure 1.

Referring back to Figure 2, along the main light propagation path 38, the light outcoupling surfaces 36 are sectionally interrupted by the light reflecting structure 42. The light reflecting structure 42 is forming an interior of the light guide 10 and features the vision surface 54 on top. The light reflecting structure 42 is forming an integrated part with the light outcoupling section 30.

The vision surface 54 has a lower side 60, pointing at the interior of the light guide 10. As shown in the right of Figure 2, the light reflecting structure 42 is adapted to guide the light 58 inside the light guide 10 by total reflection, as illustrated between sections 62, 64 and the lower side 60 of the vision surface 54 in Figure 2. As can be seen in sections 62, 64, the light reflecting structure 42 is protruding on the second side 32 in order to avoid unwanted outcoupling of light on the second side 32, for example due to manufacturing tolerances in sections 62, 64.

However, in sections 48, where the light outcoupling surfaces 36 are not interrupted by the light reflecting structure 42, the total reflection is interrupted by the light outcoupling surfaces 36. This way, light 58 is able to leave the light guide 10 via the vision surface 54.

This way, as now again shown in the lower part of Figure 1 in detail B, a criss-cross pattern 44 is achieved, if the light source 18 supplies light to the light guide 10. Detail B corresponds to the cross-sectional view in Figure 2 and the cutting line A-A in Figure 1, respectively, however, the area shown in detail B in Figure 1 is located on side 56 of the light guide 10.

In the sections 48, wherein there is no light reflecting structure 42 interrupting the light outcoupling surfaces 36, these are clearly visible in the environment of the light guide 10 as the light 58 is leaving through the vision surface 54.

On the contrary, in sections 62, 64, where the light reflecting structure 42 interrupts the light outcoupling surfaces 36, no light 58 leaves the light guide 10. Thus, the pattern 44 is created.

Due to the single-part design of the light guide 10, the light guide 10 is manufacturable a low effort while the criss-cross pattern 44 is achieved at high accuracy.

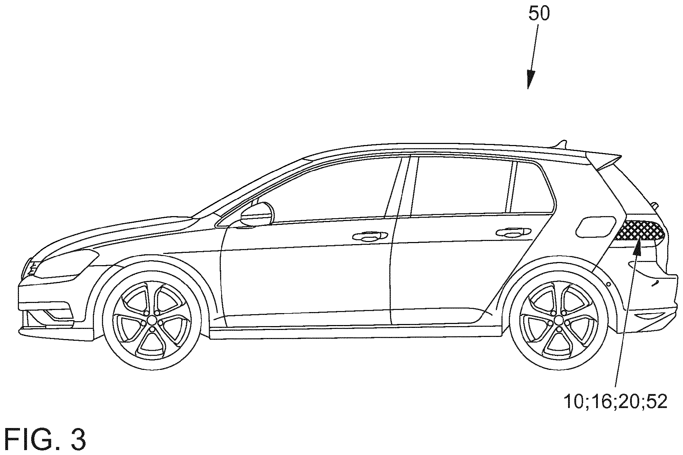

Figure 3 shows a vehicle 50, equipped with the lighting system 20 described in Figure 1. The lighting system 20 is exemplary used to form a taillight 52 of the vehicle 50. However, any light of the vehicle 50 that requires a pattern 44 may be realized making use of the invention described herein.

### Reference list

- 10: light guide
- 11: upper part
- 12: light guide support structure
- 13: lower part
- 14: reception section
- 16: light guide system
- 18: light source
- 20: lighting system
- 22: light incoupling section
- 24: first side
- 26: LEDs
- 28: circuit board
- 30: light outcoupling section
- 32: second side
- 34: light outcoupling structures
- 36: light outcoupling surface
- 38: main light propagation path
- 40: light outcoupling direction
- 42: light reflecting structure
- 44: pattern
- 46: recess
- 48: sections
- 50: vehicle
- 52: taillight
- 54: vision surface
- 56: side
- 58: light
- 60: lower side
- 62: section
- 64: section
- 66: light permeable panel

## Claims

1. Light guide (10), comprising at least:
- a light incoupling section (22) located on a first side (24) of the light guide (10);
- a light outcoupling section (30), located on a second side (32) of the light guide (10), featuring a number of light outcoupling structures (34),
- a vision surface (54), located on a side (56) opposite to the light outcoupling section (30); and
- a main light propagation path (38) inside the light guide (10) that extends from the light incoupling section (22) between the light outcoupling section (30) and a lower side (60) of the vision surface (54); wherein
- the light outcoupling structures (34) are comprising light outcoupling surfaces (36) with a light outcoupling direction (40) that is at least partially oriented transverse the main light propagation path (38),
**characterized in that**,
along the main light propagation path (38) the light outcoupling surfaces (36) are at least sectionally interrupted by a light reflecting structure (42), that forms an integrated part with the light outcoupling section (30) and the lower side (60) of the vision surface (54) and that is adapted to achieve total reflection of light (58) between the light reflecting structure (42) and the lower side (60) of the vision surface (54).

2. Light guide (10) according to claim 1, **characterized in that**, the light outcoupling structures (36) are formed by recesses (46) in the light reflecting structure (42) on the second side (32).

3. Light guide (10) according to any one of the preceding claims, **characterized in that**, the light outcoupling structures (42) are formed by material coating on the light reflecting structure (42) on the second side (32).

4. Light guide (10) according to any one of the preceding claims, **characterized in that**, in sections (48), wherein the light outcoupling surfaces (36) are not interrupted by the light reflecting structure (42), the light outcoupling surfaces (36) are interrupting total reflection of the light (58) between the lower side (60) of the vision surface (54) and the light reflecting structure (42).

5. Light guide (10) according to any one of the preceding claims, **characterized in that**, the light outcoupling structures (34) are featuring a rib-type shape extending transverse the main light propagation path (38).

6. Light guide (10) according to any one of the preceding claims, **characterized in that**, the light reflecting structure (42) is forming a pattern (44) between the light outcoupling structures (34).

7. Light guide system (16), comprising a light guide (10) according to any one of the preceding claims and a light guide support structure (12), connectable to the light guide (10).

8. Lighting system (20), comprising a light guide (10) according to any one of the claims 1 to 6 and/or a light guide system (16) according to claim 7, further comprising at least one light source (18), configured to supply light to a light incoupling section (22) of a light guide (10) of the lighting system (20).

9. Lighting system (20) according to claim 8, **characterized in that**, the light source (18) comprises an additional light guide functionally connected to a light incoupling section (22) of the light guide (10).

10. Lighting system (20) according to claim 8, **characterized in that**, the light source (18) is located in front of a light incoupling section (22) of the light guide (10).

11. Vehicle (50), comprising at least a light guide (10) according to any one of the claims 1 to 6 and/or a light guide system (16) according to claim 7 and/or a lighting system (20) according to any one of the claims 8 to 10.

12. Vehicle (50) according to claim 11, **characterized in that**, the light guide (10) is comprised by a taillight (52) of the vehicle (50).
